# EUROPÄISCHE PATENTSCHRIFT

(11) **EP 2 712 845 B1**
(45) Veröffentlichungstag und Bekanntmachung des Hinweises auf die Patenterteilung: **15.07.2015**
(21) Anmeldenummer: 13004687.3
(22) Anmeldetag: 26.09.2013
(51) Int. Cl.: C01D 7/18, C04B 2/04, C04B 2/06

(54) **Verfahren zur Herstellung von Kalkmilch für die Sodaherstellung**
Method for the preparation of milk of lime for soda production
Procédé de fabrication de lait de chaux pour la fabrication de sodas

(30) Priorität: 27.09.2012 DE 102012019003
(43) Veröffentlichungstag der Anmeldung: 02.04.2014
(73) Patentinhaber: CIECH Soda Deutschland GmbH & Co. KG, 39418 Staßfurt (DE)
(72) Erfinder: Eichhorn, Ulrich, 39418 Staßfurt (DE); Hosenthien, Peer, 39118 Magdeburg (DE); Witte, Torsten, 39418 Staßfurt / Ortsteil Neundorf (DE)
(74) Vertreter: Schuster, Müller & Partner

(56) Entgegenhaltungen:
- DE-B- 1 101 683
- DE-B1- 2 349 087

## Beschreibung

Das Verfahren zur Herstellung von Kalkmilch kann angewendet werden in Sodawerken, die nach dem Solvay-Prozess arbeiten.

Der Stand der Technik des Verfahrens zur Herstellung von Soda nach dem Solvay-Verfahren wurde von Zoran Rant in "Die Erzeugung von Soda nach dem Solvay-Verfahren", Ferdinand Enke Verlag Stuttgart, 1968, beschrieben sowie stofflich und energetisch bilanziert.

Ein Prozessschritt des Ammoniak-Soda-Verfahrens ist die Destillation. In der Destillation wird durch Zusatz von Kalkmilch und Dampf Ammoniak zurückgewonnen. Kalkmilch wird durch Löschen von Branntkalk (Kalziumoxid) mit Wasser erzeugt, wobei aus Kalziumoxid eine wässrige Suspension von Kalziumhydroxid (Kalkhydrat), die Kalkmilch, entsteht.

Der Branntkalk wird aus Kalkstein (kohlensauer Kalk, Kalziumkarbonat) in Kalkschachtöfen gebrannt (entsäuert), wobei aus dem Kalziumkarbonat das Kalziumoxid und das Kohlendioxid (Kohlensäure) entstehen. Das Kohlendioxid entsteht im Kalkofen nicht nur beim Brennen des Kalziumkarbonats, sondern auch beim Verbrennen kohlenstoffhaltiger Brennstoffe wie Koks oder Anthrazit. Das Kohlendioxid wird in den Fällkolonnen der Prozessstufe Karbonisation des Ammoniak-Sodaverfahrens zur Fällung des Natriumbikarbonats aus Ammoniumbikarbonat eingesetzt. Als Nebenprodukt bei der Karbonisation entsteht Ammoniumchlorid. In der Prozessstufe Destillation wird aus dem Ammoniumchlorid mit dem Kalziumhydroxid der Kalkmilch das Ammoniak zurückgewonnen und es entsteht Kalziumchlorid als Nebenprodukt. Vorgelagerte, mit dem Ammoniak-Sodaverfahren verbundene Prozessstufen sind deshalb das Kalkbrennen und das Kalklöschen.

Beim Kalkbrennen entsteht aus der Entsäuerung des Kalksteins und aus der Verbrennung des Brennstoffes ein Überschuss aus Kohlendioxid im Verhältnis zur Menge des Kalziumoxids im Branntkalk und dem Kalziumhydroxid in der Kalkmilch. Das überschüssige Kohlendioxid wird in die Umwelt emittiert. Ein Teil des Kalziumoxids kann deshalb dem Solvay-Verfahren aus anderen Prozessen zugeführt werden und muss nicht beim vorgelagerten Kalkbrennen erzeugt werden.

Ein Verfahren zur Herstellung von Azetylen und Natriumbikarbonat und/oder Natriumkarbonat ist bekannt aus der DE 1 101 683 A, bei dem das Solvay-Verfahren kombiniert wird mit den bekannten Verfahren zur Herstellung von Kalziumkarbid und Acetylen. Das im Kalkbrennofen entstehende Kalziumoxid (CaO) wird im Karbidofen zum Kalziumkarbid (CaC₂) und anschließend weiter im Acetylen-Generator mit Wasser zu Acetylen (C₂H₂) und Kalziumhydroxid (Ca(OH)2) umgesetzt. Die weiteren Prozessstufen entsprechen dem Solvay-Verfahren. Die Zielstellung dieses Verfahrens ist die Verwendung eines CaO-haltigen Stoffes, der in einem anderen industriellen Herstellungsprozess anfällt und für die Sodaproduktion Verwendung finden soll.

Die Herstellung von Zement erfolgt seit Anfang der 1970er Jahre überwiegend nach dem Trockenverfahren. Bei diesem Verfahren zur Herstellung von Zementklinkern in Drehrohröfen mit Zyklonvorwärmern fällt in den Zyklonvorwärmern ein Produkt als Filterstaub an, der Vorwärmerkalk, Vorwärmermehl oder Bypasszement genannt wird. Seit Anfang der 1990er Jahre werden bei diesem Herstellungsverfahren überwiegend Ersatzbrennstoffe aus Recyclingmaterialien verwendet. Der Vorwärmerkalk kann dann nicht immer vollständig dem Endprodukt, dem Zementmehl zugesetzt werden, da bei der vollständigen Zumischung des Vorwärmerkalks zum Zementmehl die gewünschten Zementqualitäten nicht erreicht werden können. Soweit keine weitere Verwendungsmöglichkeiten für den Vorwärmerkalk bestehen, muss er entsorgt werden. Ursache der Unzulässigkeit der vollständigen Zumischung des Vorwärmerkalks zum Zementmehl sind häufig Stoffe, die aus den eingesetzten Ersatzbrennstoffen stammen, z. B. Chloride. Die Verfahren zur Herstellung von Zement sind von Friedrich W. Locher in "Zement", Vbt Verlag 2000, näher beschrieben.

Branntkalk und Vorwärmerkalk enthalten einen mehr oder minder hohen Anteil an Kalziumoxid. Nicht der gesamte Anteil des Kalziumoxids ist beim Kalklöschen in Kalziumhydroxid umsetzbar und damit für die Destillation des Ammoniaks nutzbar. Der nutzbare Anteil im Branntkalk bzw. Vorwärmerkalk wird aktives Kalziumhydroxid oder aktiver Kalkanteil genannt. In der Sodaindustrie wird der aktive Kalziumoxidanteil des Branntkalkes aus der Löschkurve nach DIN EN 459 über die Wärmetönung der Löschreaktion (Hydratbildung) ermittelt.

Der Stand der Technik lehrt nicht, wie anfallende Nebenprodukte aus der Herstellung von Zement vorteilhaft und effektiv bei der Sodaherstellung eingesetzt werden können. Die Aufgabe der Erfindung ist es daher, ein Verfahren zur Herstellung von Kalkmilch für die Sodaherstellung zu schaffen, bei dem Abprodukte aus der Zement- und Kalkherstellung zur Herstellung von Kalkmilch genutzt werden können.

Diese Aufgabe wird gelöst nach den Verfahren der Merkmale der Ansprüche 1 und 4. Vorteilhafte Ausgestaltungen sind in den Unteransprüchen angegeben.

So wurde ein Verfahren zur Herstellung von Kalkmilch für die Sodaherstellung geschaffen, bei dem ein Vorwärmerkalk als Produkt/Abprodukt aus dem Herstellungsprozess von Zement und ein Feinkalk als Produkt/Abprodukt aus der Herstellung von Kalk, in einem Mischvorgang zu einem Vorwärmerkalk mit erhöhtem aktiven CaO-Anteil gemischt wird. Diesem Vorgang schließt sich ein weiterer Mischvorgang an, bei dem der Vorwärmerkalk mit erhöhtem aktiven CaO-Anteil mit einem Branntkalk gemischt wird, sich diesem Mischvorgang ein Löschvorgang anschließt und somit als Endprodukt Kalkmilch entsteht, welche dann für den weiteren Prozess zur Herstellung von Soda zum Einsatz kommt.

Zur Erfindung gehört auch, dass der aktive CaO-Gehalt durch Regelung der Mischung so eingestellt wird, dass das Gemisch einen konstanten, hohen CaO-Gehalt besitzt und die Kalkmilch, die durch anschließendes Löschen des Gemisches entsteht, einen konstanten Kalkmilchtiter von 95 bis 105/DN10 besitzt.

Erfindungsgemäß ist auch, dass der Prozess zur Herstellung von Kalkmilch für die Sodaherstellung derart abläuft, dass ein Vorwärmerkalk aus dem Herstellungsprozess von Zement und ein Feinkalk aus dem Herstellungsprozess von Kalk unter direkter Zugabe eines Branntkalkes in einem Mischvorgang gemischt werden und dieses Gemisch dem nachfolgenden Löschvorgang zugeführt wird.

Die Erfindung soll anhand der nachfolgenden Ausführungsbeispiele näher erläutert werden. Die dazugehörigen Zeichnungen zeigen in
- Figur 1:: ein Fließschema zur Herstellung einer Kalkmilch,
- Figur 2:: einen zweiten Prozessablauf in Form eines Fließschemas, welches den Fertigungsablauf zur Herstellung von Kalkmilch dokumentiert.

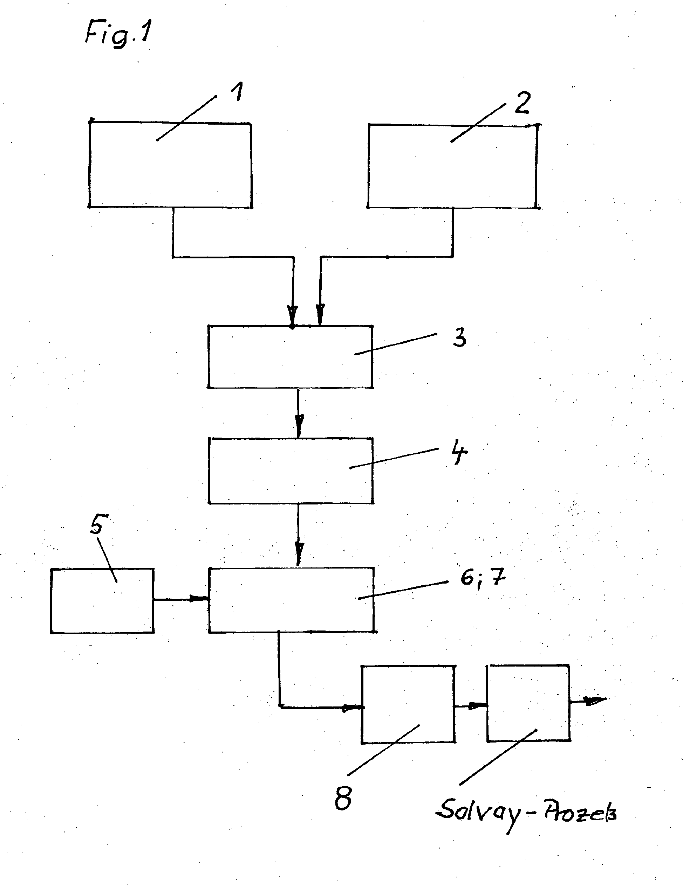

Gemäß dem Ausführungsbeispiel nach Figur 1 werden die Einsatzstoffe/Einsatzprodukte, Vorwärmerkalk 1 und Feinkalk 2, in einer Prozessstufe, dem Mischvorgang 3, gemischt. In dem Mischvorgang 3 entsteht ein Produkt, ein Vorwärmerkalk 4 mit einem konstanten CaO-Gehalt.

Im Nachfolgenden wird der Vorwärmerkalk 4 mit einem Branntkalk 5 gemischt und dann gelöscht. Dies erfolgt in den Prozessstufen Mischvorgang 6 und Löschvorgang 7 und im Ergebnis steht eine Kalkmilch 8, Ca(OH)₂, zur Verfügung, die als Produkt im Prozessablauf zur Herstellung von Soda zum Einsatz kommt.

Dem Branntkalk 5 aus den Kalköfen kann höchstens so viel Vorwärmerkalk 1 und Feinkalk 2 zugemischt werden, dass kein Kohlendioxidüberschuss beim Kalkbrennen entsteht, sondern alles Kohlendioxidgas in der Karbonisation verbraucht wird. Der Anteil des praktisch zumischbaren aktiven CaO liegt bei ca. 10%.

Durch einen geregelten Mischvorgang wird im Vorwärmerkalkgemisch 4 die Erhöhung des aktiven CaO-Gehaltes bewirkt.

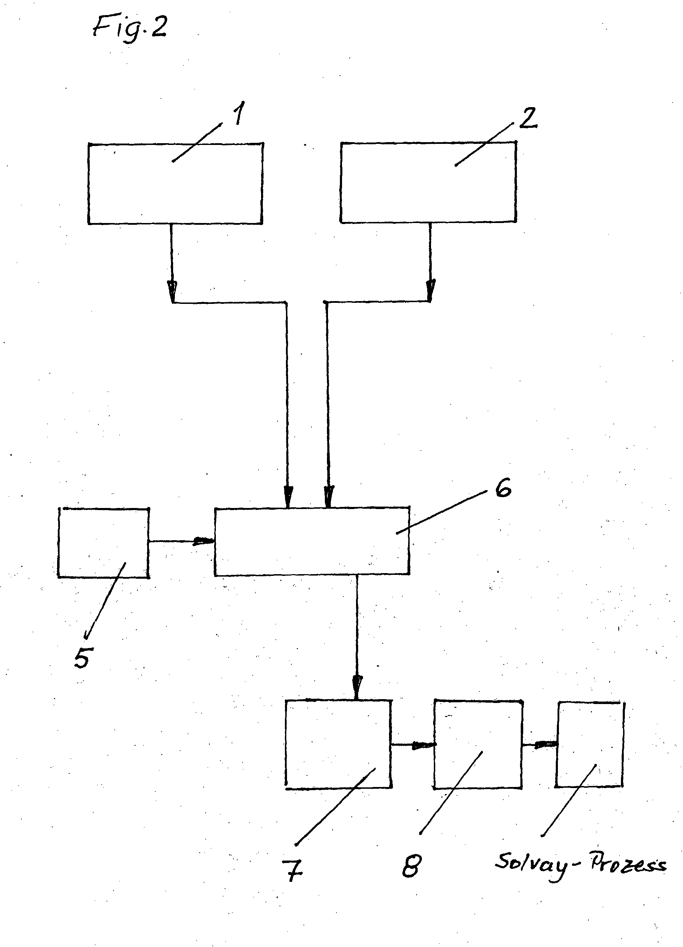

Im in der Figur 2 dargestellten Fließbild ist ein weiterer Herstellungsprozess von Kalkmilch gemäß der Erfindung dokumentiert. Hier werden die Ausgangsprodukte, der Vorwärmerkalk 1 aus dem Herstellungsprozess von Zement und der Feinkalk 2 aus dem Herstellungsprozess von Kalk, in einen Mischbehälter geleitet, dem gleichfalls ein Branntkalk 5 zugeführt wird. Diese drei Produkte, der Vorwärmerkalk 1, der Feinkalk 2 und der Branntkalk 5, werden gemischt und dann in einem folgenden Verfahrensschritt, dem Löschvorgang 7, unter Zugabe von Wasser gelöscht. Im Ergebnis steht eine Kalkmilch 8 zur Verfügung.

Der Anteil an aktivem CaO im Ergebnis der Mischung 6 soll nicht wesentlich unter dem Anteil an aktivem CaO im Branntkalk 5 sein. In einem bevorzugten Ausführungsbeispiel wird den Misch-/Löschvorgängen 6, 7 ein Branntkalk 5 mit einem aktiven Kalziumoxidgehalt von ca. 55 % zugeführt, der Vorwärmerkalk 1 aus der Zementherstellung besitzt einen aktiven CaO-Gehalt von ca. 15 %. Der Vorwärmerkalk 1 wird mit dem Feinkalk 2 gemischt, welcher einen Gehalt von 85 % aktiven Kalziumoxids besitzt. Dabei werden der Vorwärmerkalk 1 und der Feinkalk 2 staubförmig und freifließend in den Prozess eingegeben. Das Gemisch aus Vorwärmerkalk 1 und Feinkalk 2 hatte nach den durchlaufenden Verfahrensschritten einen Gehalt an aktivem Kalziumoxid von 45 %.

Das Verfahren läuft dabei so ab, dass das Vorwärmerkalkgemisch 1, 2 mit dem Branntkalk 5, welcher als Stückkalk aus dem Kalkofen der Sodaherstellung zugemischt, den Mischtrommeln - der Prozessstufe Mischvorgang 6/Löschvorgang 7 - zugeführt und hier mit vorgewärmten Löschwasser gelöscht wird. Der Anteil der so genannten Weißen Steine und Kalklinsen aus dem Löschvorgang 7 ist bei dem erfindungsgemäßen Verfahren geringer als nur beim Löschen des Branntkalks aus den Kalköfen. Als Weiße Steine werden die Kerne der Kalksteinstücke bezeichnet, die in den Kalköfen nicht vollständig durchgebrannt worden sind und den Kalköfen wiederholt zugeführt werden. Kalklinsen sind Kalkstücke, die ebenfalls nicht durchgebrannt oder überbrannt sind, werden aufgrund ihrer zu geringen Größe als Reststoff entsorgt und den Öfen nicht wieder zugeführt. Eine Verringerung der Menge der weißen Steine und Kalklinsen wird durch das schonendere Brennen, den stärkeren Weichbrand bei geringsten Brenntemperaturen und durch die längeren Verweilzeiten im Ofen erreicht, da die Kalkbrennöfen aufgrund der Zumischung des Vorwärmerkalks 1 geringer belastet werden.

Bereits durchgeführte Untersuchungen bei der Herstellung von Kalkmilch 8 aus Branntkalk 5 unter Zusatz von Vorwärmerkalk 1 nach der vorliegenden Erfindung ergaben keine negativen Auswirkungen auf die Durchführung der nachfolgenden Prozessstufen, so auf das Produkt Natriumbikarbonat, die Reststoffe Endlauge (Kalziumchloridlösung) und auf die aufgehaldeten Kalkreste. Die Kohlendioxidbilanz des Sodaprozesses verbesserte sich wesentlich.

## Patentansprüche

1. Verfahren zur Herstellung von Kalkmilch für die Sodaherstellung, **dadurch gekennzeichnet,**
**dass** ein Vorwärmerkalk (1) aus dem Herstellungsprozess von Zement und ein Feinkalk (2) aus dem Herstellungsprozess von Kalk in einem Mischvorgang (3) zu einem Vorwärmerkalkgemisch (4) gemischt, das Vorwärmerkalkgemisch (4) mit einem Branntkalk (5) in zwei nachfolgenden Prozessstufen, einem Mischvorgang (6) gemischt und in einem Löschvorgang (7) zu Kalkmilch (8) gelöscht werden und die so hergestellte Kalkmilch (8) dem nachfolgenden Solvay-Prozess zur Herstellung von Soda zugeführt wird.

2. Verfahren nach Anspruch 1,
**dadurch gekennzeichnet,**
**dass** der Mischvorgang (3) des Vorwärmerkalkgemisches (4) so gesteuert wird, dass der Gehalt an aktivem Kalziumoxid im Vorwärmerkalkgemisch (4) konstant gehalten wird.

3. Verfahren nach den Ansprüchen 1 und 2,
**dadurch gekennzeichnet,**
**dass** der konstante Gehalt an aktivem Kalziumoxid des Vorwärmerkalkgemisches (4) zumindest so groß wie der Gehalt des aktiven Kalziumoxids im Branntkalk (5) ist.

4. Verfahren zur Herstellung von Kalkmilch für die Sodaherstellung, **dadurch gekennzeichnet,**
**dass** ein Vorwärmerkalk (1) aus dem Herstellungsprozess von Zement und ein Feinkalk (2) aus dem Herstellungsprozess von Kalk, unter Zugabe eines Branntkalkes (5) in einem Mischvorgang (6) gemischt und dieses Gemisch in einem nachfolgenden Löschvorgang (7) zu Kalkmilch (8) gelöscht werden und die so hergestellte Kalkmilch (8) dem nachfolgenden Solvay-Prozess zur Herstellung von Soda zugeführt wird.

## Claims

1. A process for the production of milk of lime for the production of soda, **characterized in**
**that** a preheated lime (1) from the production process of cement and a fine lime (2) from the production process of lime is mixed in a mixing process (3) to a preheated lime mixture (4), in two subsequent process steps the preheated lime mixture (4) with a burnt lime (5) is mixed in a mixing process (6) and slaked in a slaking process (7) to milk of lime (8), and the thus produced milk of lime (8) is fed to the subsequent Solvay process for the production of soda.

2. Process in accordance with Claim 1,
**characterised in**
**that** the mixing process (3) of the preheated lime mixture (4) is controlled so that the content of active calcium oxide in the preheated lime mixture (4) is kept constant.

3. Process in accordance with Claims 1 and 2,
**characterised in**
**that** the constant content of active calcium oxide of the preheated lime mixture (4) is at least as high as the content of the active calcium oxide in the burnt lime (5).

4. Process for the production of milk of lime for the production of soda, **characterised in,**
**that** a preheated lime (1) from the production process of cement and a fine lime (2) from the production process of lime, with the addition of a burnt lime (5), are mixed in a mixing process (6) and this mixture is slaked in a subsequent slaking process (7) to milk of lime (8) and the thus produced milk of lime (8) is fed to the subsequent Solvay process for the production of soda.

## Revendications

1. Procédé pour la fabrication de lait de chaux pour la production de sodas, **caractérisé par le fait**
**qu'**une chaux préchauffée (1) issue du processus de production du ciment et une chaux pulvérisée (2) issue du processus de production de chaux sont mélangées dans un processus de mélange (3) pour obtenir un mélange de chaux préchauffée (4), le mélange de chaux préchauffée (4) étant mélangé avec une chaux vive (5) dans deux étapes de processus suivantes, un processus de mélange (6), ce mélange étant éliminé dans un processus de suppression (7) pour obtenir un lait de chaux (8), le lait de chaux ainsi fabriqué (8) étant amené au processus Solvay suivant pour la production de sodas.

2. Procédé conformément à la revendication n° 1,
**caractérisé par le fait**
**que** le processus de mélange (3) du mélange de chaux préchauffée (4) est contrôlé de telle manière à ce que la teneur en oxyde en calcium actif dans le mélange de chaux préchauffée (4) soit maintenue constante.

3. Procédé conformément aux revendications n°1 et n°2,
**caractérisé par le fait**
**que** la teneur constante en oxyde de calcium actif du mélange de chaux préchauffée (4) est au moins égale à la teneur en oxyde de calcium actif dans la chaux vive (5).

4. Procédé pour la fabrication de lait de chaux pour la production de sodas, **caractérisé par le fait**
**qu'**une chaux préchauffée (1) issue du processus de production du ciment et une chaux pulvérisée (2) issue du processus de production de chaux sont mélangées, sous apport d'une chaux vive (5), dans un processus de mélange (6), ce mélange étant éliminé dans un processus de suppression (7) consécutif pour obtenir un lait de chaux (8), le lait de chaux ainsi fabriqué (8) étant amené au processus Solvay suivant pour la production de sodas.
